# EUROPEAN PATENT APPLICATION

(11) **EP 3 018 618 A1**
(43) Date of publication of application: **11.05.2016**
(21) Application number: 15188286.7
(22) Date of filing: 05.10.2015
(51) Int. Cl.: G06Q 10/10, H04W 52/02

(54) **ACTION ENCOURAGEMENT METHOD, APPARATUS, AND PROGRAM FOR ENCOURAGING USER TO MOVE TO FACILITY SUITABLE FOR SCHEDULE OR TASK**

(30) Priority: 10.11.2014 JP 2014228042
(71) Applicant: Panasonic Intellectual Property Management Co., Ltd., Osaka-shi, Osaka 540-6207 (JP)
(72) Inventor: SAKATA, Kotaro, Osaka, 540-6207 (JP); MINAMI, Kimio, Osaka, 540-6207 (JP); SUGIYAMA, Yasushi, Osaka, 540-6207 (JP)
(74) Representative: Eisenführ Speiser

(57) **Abstract**

It is necessary to effectively encourage the user to take an action without making the user feel inconvenience, regardless of the charge state of the device held by the user. A way of improved the inducement of user's conduct can be to retrieve information indicating a schedule or task of the user, to retrieve charge state information indicating a device held by the user, to determine a facility to which the user is to be guided, on the basis of the information indicating the schedule or task of the user and the charge state information, and to output information indicating the determined facility.

## Description

### BACKGROUND

### 1. Technical Field

The present disclosure relates to an action encouragement method, apparatus, and program for encouraging the user to move to a facility suitable for a schedule or task.

### 2. Description of the Related Art

There have been proposed systems that encourage the user to take a predetermined action. Examples of the predetermined action include an action conducive to energy saving and an action encouraging a reduction in garbage.

For example, Japanese Unexamined Patent Application Publication No. 2013-20587 discloses a user action encouragement method which involves detecting an action of a user and encouraging the user to take an action according to user characteristics. Specifically, this user action encouragement method involves analyzing user characteristics from the detection result of a user action and encouraging the user to take an action according to the user characteristics.

### SUMMARY

However, the technology of Japanese Unexamined Patent Application Publication No. 2013-20587 only encourages the user to take an action such as energy saving, and such encouragement is not made considering the state of the device held by the user, such as a smartphone.

While these systems have drastically improved in performance in recent years, the power consumption thereof has increased accordingly. For this reason, if such a system only encourages the user to take an action without considering the charge state of the device, the battery of the device may be exhausted, thereby making the user feel inconvenience.

One non-limiting and exemplary embodiment provides an action encouragement method, apparatus, and program which can effectively encourage the user to take an action without making the user feel inconvenience, regardless of the charge state of the device held by the user.

In one general aspect, the techniques disclosed here feature a computer-implemented method. The computer-implemented method includes retrieving, by a computer, information indicating a schedule or task of a user, the schedule being a plan whose execution time is determined, the task being a plan whose execution time is not determined; retrieving, by the computer, charge state information indicating the amount of charge of a device held by the user; determining, by the computer, a facility to which the user is to be guided, on the basis of the information indicating the schedule or task of the user and the charge state information; and outputting information indicating the determined facility to the device held by the user.

According to the present disclosure, it is possible to effectively encourage the user to take an action without making the user feel inconvenience, regardless of the charge state of the device held by the user.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1A is a diagram showing an overview of an action encouragement system according to an embodiment of the present disclosure;
Fig. 1B is a diagram showing a data center operating company according to the present embodiment;
Fig. 1C is a diagram showing a jointly operated data center operating company according to the present embodiment;
Fig. 2 is a block diagram showing an example configuration of an action encouragement system according to the present embodiment;
Fig. 3 is a diagram showing an example of facility information according to the present embodiment;
Fig. 4A is a diagram showing examples of a schedule according to the present embodiment;
Fig. 4B is a diagram showing examples of a task according to the present embodiment;
Fig. 5 is a flowchart showing an example of the steps of an action encouragement process according to the present embodiment;
Fig. 6A is a diagram showing a display example of a user guide message according to the present embodiment;
Fig. 6B is a diagram showing a display example of a user guide message according to the present embodiment;
Fig. 7 is a diagram showing the hardware configuration of a computer that implements the functions of devices on the basis of a program;
Fig. 8 is a diagram showing service type 1 (company's own data center type);
Fig. 9 is a diagram showing service type 2 (IaaS type);
Fig. 10 is a diagram showing service type 3 (PaaS type); and
Fig. 11 is a diagram showing service type 4 (SaaS type);

### DETAILED DESCRIPTION

Now, an embodiment of the present disclosure will be described in detail with reference to the accompanying drawings.

### Overview of Services Provided

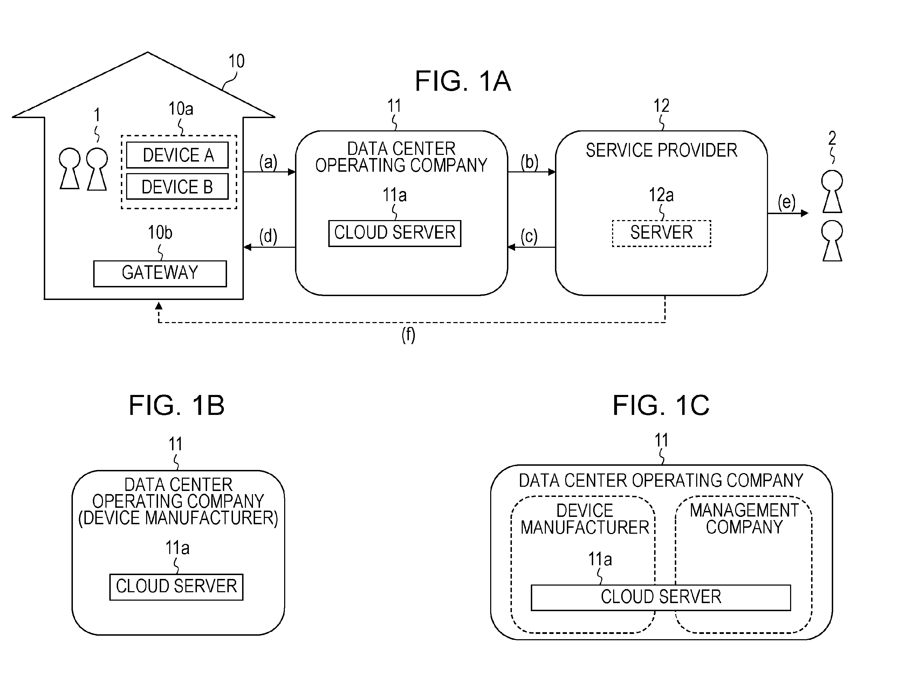

Figs. 1A to 1C are diagrams showing overviews of action encouragement systems according to the present embodiment. Fig. 1A shows an overview of an action encouragement system according to the present embodiment. A group 10 is, for example, a facility and may have any size. The group 10 includes multiple devices 10a consisting of devices A and B and a gateway 10b.

The devices 10a include devices which can be connected to the Internet (e.g., smartphone, PC) and devices which cannot be connected to the Internet by themselves. The devices 10 may include devices which cannot be connected to the Internet by themselves but can be connected thereto through the gateway 10b. The group 10 also includes users 1 who use the devices 10a.

A data center operating company 11 includes a cloud server 11 a. The cloud server 11 a is a virtual server that cooperates with various devices through the Internet. The cloud server 11 a mostly manages big data or the like, which is difficult to handle using a typical database management tool or the like. The data center operating company 11 performs the management of data, the management of the cloud server 11 a, the operation of a data center which performs those, and the like. Details of the operation performed by the data center operating company 11 will be described later.

The data center operating company 11 is not limited to a company which only performs the management of data, the operation of the cloud server 11 a, and the like. For example, if a device manufacturer which develops and manufactures one of the devices 10a also performs the management of data, the management of the cloud server 11 a, and the like, the device manufacturer serves as the data center operating company 11 (Fig. 1 B).

Further, the data center operating company 11 may not consist of a single company. For example, if a device manufacturer and a different management company manage data or operate the cloud server 11 a in a joint or shared manner, both or either thereof serve as the data center operating company 11 (Fig. 1C).

A service provider 12 holds a server 12a. The server 12a may have any size and may be, for example, a memory in a personal computer (PC). The service provider 120 may not hold the server 12a.

In the above service, the gateway 10b is not essential. For example, if the cloud server 11 a manages all the data, this system does not have to include the gateway 10b. There are also cases in which there are no devices which cannot be connected to the Internet by themselves, like a case in which all devices in a store are connected to the Internet.

Next, the flow of information in the above service will be described. First, the devices A and B in the group 10 transmit log information thereof to the cloud server 11 a in the data center operating company 11. The cloud server 11 a accumulates the log information from the devices A and B (Fig. 1A).

The log information is, for example, information indicating the status, date/time, or the like of the operation of each device 10a, such as a smartphone or PC. However, the log information is not limited to such information but rather is all information which can be retrieved from all the devices.

Log information may be provided from the devices 10a directly to the cloud server 11 a through the Internet. Further, log information from the devices 10a may be temporarily accumulated in the gateway 10b and then provided from the gateway 10b to the cloud server 11 a.

The cloud server 11 a of the data center operating company 11 provides a predetermined amount of the accumulated log information to the service provider 12. The predetermined amount may be an amount obtained by organizing the information accumulated in the data center operating company so that the information can be provided to the service provider 12, or may be an amount requested by the service provider 12. Further, the amount of log information to be provided need not necessarily be predetermined and may be changed according to the situation.

The log information is stored in the server 12a held by the service provider 12 as necessary (Fig. 1A). The service provider 12 organizes the log information into information suitable for services to be provided to users and then provides the resulting information to the users. Users to which the above information is provided may be the users 1, who use the devices 10a, or may be external users 2.

For example, the above information may be provided from the service provider 12 directly to the users [(e) of Fig. 1A]. Or, the information may be provided to the user again through the cloud server 11 a of the data center operating company 11 [(c) and (d) of Fig. 1A]. Further, the cloud server 11 a of the data center operating company 11 may organize the log information into information suitable for services to be provided to the users and then provide the resulting information to the service provider 12.

The users 1 and users 2 may be the same or different.

### Embodiment

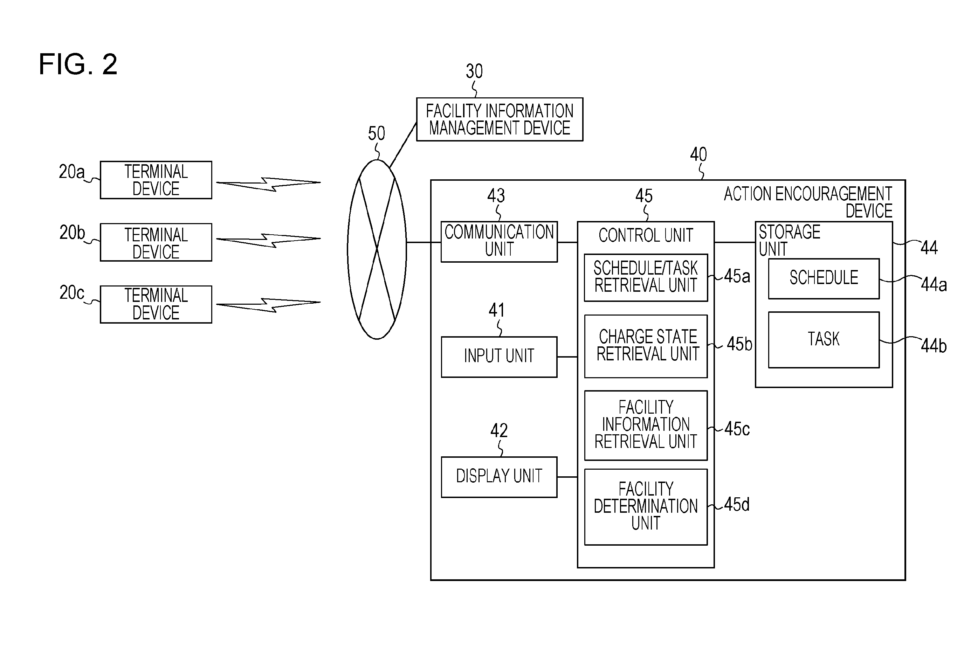

Fig. 2 is a block diagram showing an example configuration of the action encouragement system according to the present embodiment. As shown in Fig. 2, the action encouragement system includes terminal devices 20a to 20c, a facility information management device 30, and an action encouragement device 40 which are connected through a network 50.

For example, the terminal devices 20a to 20c correspond to the devices 10a; the facility information management device 30 corresponds to the cloud server 11a; and the action encouragement device 40 corresponds to the server 12a.

The terminal devices 20a to 20c are user terminal devices such as smartphones or PCs. The terminal devices 20a to 20c are connected to the network 50 wirelessly, but may be connected thereto by wire.

The facility information management device 30 is a server which manages facility informati1on, for example, compiles or updates it. The facility information management device 30 is connected to the network 50 by wire or wirelessly.

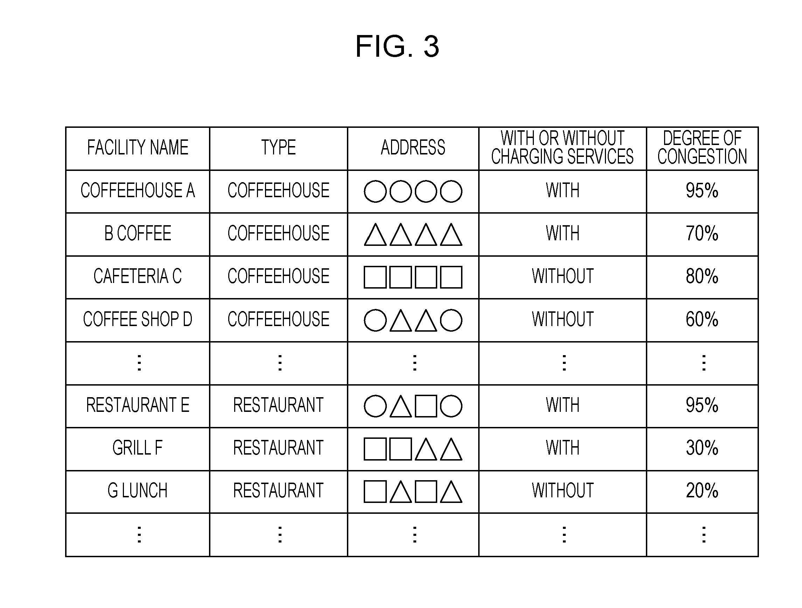

Referring now to Fig. 3, the facility information held by the facility information management device 30 will be described. Fig. 3 is a diagram showing an example of the facility information according to the present embodiment.

The facility information shown in Fig. 3 includes facility names, types, addresses, with or without charging services, and the degrees of congestion. Note that the facility information shown in Fig. 3 is illustrative only and any other types of information about facilities may be included. The facility information may also include information about the facility in which the user is currently staying.

A facility name refers to the name of a facility. A type refers to the type of a facility. An address refers to the address of the location of a facility. "With or without charging service" refers to information indicating whether the user of a facility can receive charging services.

The degree of congestion refers to the ratio of the number of the current users of a facility to the maximum number of users who can use the facility. Each facility always transmits information indicating the degree of congestion from a server or the like held by the facility to the facility information management device 30. The facility information management device 30 always receives the congestion degree information from the server or the like held by the facility and updates the corresponding degree of congestion in the facility information.

Alternatively, the facility information management device 30 may receive, from a server or the like held by each facility, information indicating the maximum number of users who can use the facility and information indicating the number of the current users of the facility and then calculate the degree of congestion.

The degree of congestion may be calculated by another criterion. For example, if a facility is providing charging services for terminal devices, the degree of congestion of the facility may be calculated from the ratio of the number of outlets in use to the number of outlets installed for charging services in the facility.

Referring back to Fig. 2, the action encouragement device 40 is a server which includes an input unit 41, a display unit 42, a communication unit 43, a storage unit 44, and a control unit 45.

The input unit 41 is an input device such as a keyboard or mouse. The display unit 42 is a display device such as a display. The communication unit 43 is a network card which communicates with other devices through the network 50.

The storage unit 44 is a storage device such as a memory or hard disk drive. The storage unit 44 stores information such as a schedule 44a and a task 44b. In the following description, the schedule 44a is information indicating plans whose execution time is determined, whereas the task 44b is information indicating plans whose execution time is not determined.

More specifically, the schedule 44a is information indicating schedules of the users holding the terminal devices 20a to 20c. The action encouragement device 40 retrieves, from the terminal devices 20a to 20c, information indicating schedules of the users registered in the terminal devices 20a to 20c and stores the information indicating of the schedules as the schedule 44a.

The task 44b is information indicating tasks of the users holding the terminal devices 20a to 20c. The action encouragement device 40 retrieves, from the terminal devices 20a to 20c, information indicating tasks of the users registered in the terminal devices 20a to 20c and stores the information indicating the tasks as the task 44b.

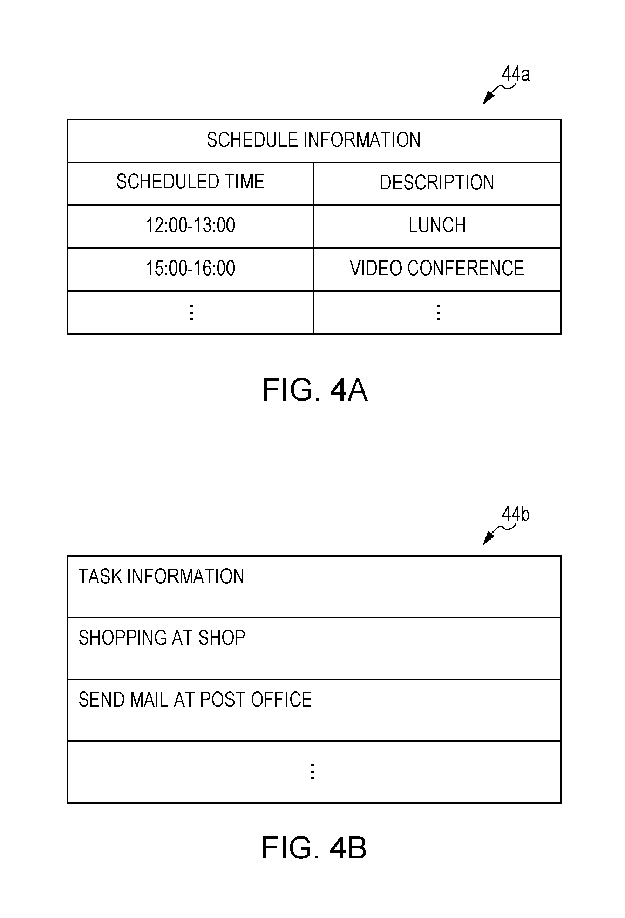

Referring now to Figs. 4A and 4B, the schedule 44a and task 44b will be described in detail. Fig. 4A is a diagram showing an example of the schedule 44a according to the present embodiment, and Fig. 4B is a diagram showing an example of the task 44b according to the present embodiment.

While Figs. 4A and 4B show daily schedules of a single user and daily tasks of a single user, respectively, the schedule 44a and task 44b includes schedules and tasks of multiple users who are to be encouraged to take an action. The schedule 44a may be storing schedules corresponding to several days.

As shown in Fig. 4A, the schedule 44a includes a plan indicating that the user will take a lunch "from 12:00 to 13:00" and a plan indicating that the user will have a video conference "from 15:00 to 16:00." As shown in Fig. 4B, the task 44b includes a task indicating that the user will do "shopping at a shop" and a task indicating that the user will "send mail at a post office."

Referring back to Fig. 2, the control unit 45 includes a schedule/task retrieval unit 45a, a charge state retrieval unit 45b, a facility information retrieval unit 45c, and a facility determination unit 45d.

The schedule/task retrieval unit 45a retrieves information indicating a schedule or task from each of the terminal devices 20a to 20c through the communication unit 43 and network 50. The schedule/task retrieval unit 45a then stores the retrieved schedule or task information in the storage unit 44 as the schedule 44a or task 44b.

The schedule/task retrieval unit 45a determines whether any task is registered in the task 44b, or compares the current date/time with the information registered in the schedule 44a and then determines whether there is any schedule which should be executed within a predetermined time.

The charge state retrieval unit 45b retrieves, from each of the terminal devices 20a to 20c, charge state information indicating the amount of charge of the terminal device 20. The charge state retrieval unit 45b then compares the amount of charge with a predetermined threshold to determine whether the amount of charge of the terminal device 20 is sufficient.

The facility information retrieval unit 45c retrieves information about facilities in which a schedule or task of the user of each terminal device 20 to be executed within a predetermined time can be executed, as well as information indicating the degrees of congestion of the facilities.

The facility determination unit 45d determines a facility to which the user should be guided, on the basis of the information about the facilities and the information indicating the degrees of congestion of the facilities retrieved by the facility information retrieval unit 45c and the charge state information of the terminal device 20 retrieved by the charge state retrieval unit 45b. The facility determination unit 45d then transmits a message guiding the user to the determined facility, to the terminal device 20.

Specifically, if the amount of charge is sufficient, the facility determination unit 45d transmits a message guiding the user to a facility having a low degree of congestion, of the facilities in which the schedule or task can be executed.

In contrast, if the amount of charge is insufficient, the facility determination unit 45d transmits a message guiding the user to a facility having a low degree of congestion, of the facilities in which the schedule or task can be executed and which provide charging services.

Thus, it is possible to guide the user to a facility suitable for executing the schedule or task while preventing the user from feeling inconvenience due to the battery exhaustion of the terminal device 20.

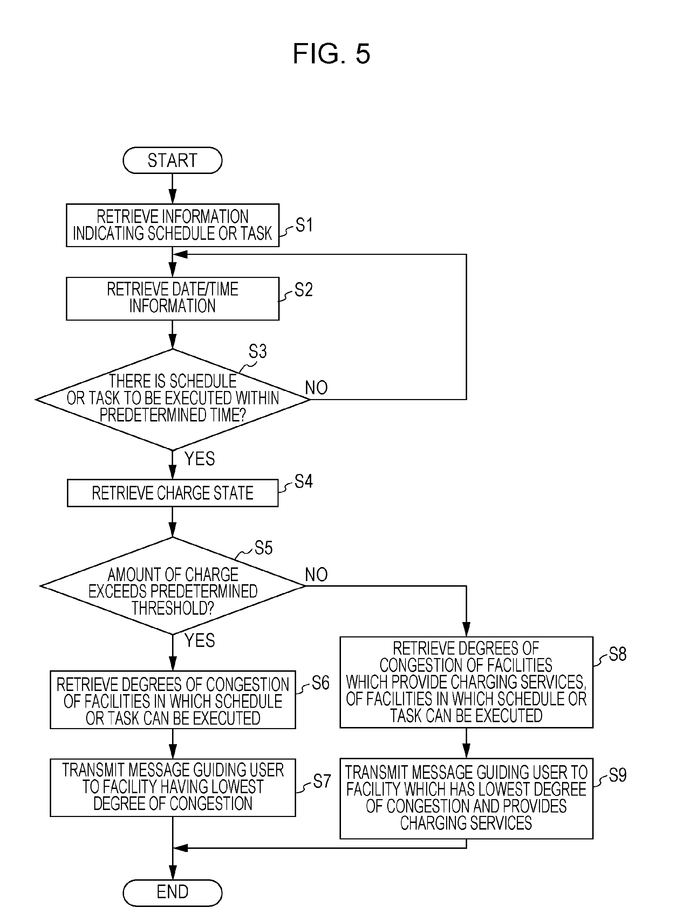

Next, there will be described the steps of an action encouragement process according to the present embodiment. Fig. 5 is a flowchart showing an example of the steps of an action encouragement process according to the present embodiment.

First, the schedule/task retrieval unit 45a retrieves information indicating a schedule or task from one of the terminal devices 20a to 20c through the communication unit 43 and network 50 (step S1).

Specifically, the schedule/task retrieval unit 45a receives information indicating a schedule or task transmitted from one of the terminal devices 20a to 20c on the basis of an operation of the user of the terminal device 20, who wants to receive an action encouragement service.

Alternatively, the schedule/task retrieval unit 45a may receive information indicating a schedule or task as follows: it receives an encouragement service providing request from one of the terminal devices 20a to 20c whose user wants to receive an action encouragement service, requests the terminal device 20 to transmit information indicating a schedule or task of the user, and then receives the schedule or task information transmitted by the terminal device 20 on the basis of the request.

The schedule/task retrieval unit 45a then stores the received schedule or task information in the storage unit 44 as the schedule 44a or task 44b.

The schedule/task retrieval unit 45a then retrieves current date/time information from an internal clock (not shown) included in the action encouragement device 40 (step S2).

The schedule/task retrieval unit 45a then compares the current date/time information with the schedule 44a and task 44b to determine whether there is any schedule or task to be executed within a predetermined time. If there is no schedule or task to be executed within the predetermined time (step S3: NO), step S2 is performed again after the lapse of a certain time.

For example, if the current time is 14:00 and the predetermined time is one hour, the video conference which the user will have from 15:00 to 16:00, which is included in the schedule 44a shown in Fig. 4A, is a schedule to be executed within one hour.

If there is any schedule or task to be executed within the predetermined time among the schedules and tasks of the user (step S3: YES), the charge state retrieval unit 45b retrieves, from the terminal device 20 held by the user, charge state information thereof (step S4).

The charge state retrieval unit 45b then determines whether the amount of charge exceeds a predetermined threshold (step S5). If the charge state exceeds the predetermined threshold (step S5: YES), the facility information retrieval unit 45c retrieves information indicating the degrees of congestion of facilities in which the schedule or task to be executed with the predetermined time can be executed (step S6).

Specifically, first, the facility information retrieval unit 45c retrieves current location information from the terminal device 20. The facility information retrieval unit 45c then determines a facility type in which the schedule or task to be executed within the predetermined time can be executed. For example, if the schedule to be executed within the predetermined time is "a video conference", the facility information retrieval unit 45c determines a facility type in which the video conference can be executed.

This determination is made by previously receiving, from the user, the registration of facility types in which respective schedules or tasks can be executed and then referring to the facility types. For example, the user previously registers "coffeehouse" or the like as a facility type in which a video conference is executed.

Alternatively, the storage unit 44 of the action encouragement device 40 may previously store a table indicating the correspondences between schedules or tasks and facilities in which the schedules or tasks can be executed. In this case, the above determination can be made by previously associating a video conference with coffeehouse in the table.

The facility information retrieval unit 45c then retrieves information indicating a facility which corresponds to the determined facility type and is close to the retrieved current location, from the facilities registered in the facility information shown in Fig. 3, as well as retrieves information indicating the degree of congestion of the facility.

For example, if it is determined that the video conference can be executed at a "coffeehouse," the facility information retrieval unit 45c retrieves information indicating a facility whose type is "coffeehouse" and which is close to the current location, from among the facilities registered in the facility information shown in Fig. 3, as well as retrieves information indicating the degree of congestion of the facility.

The facility close to the current location is, for example, a facility in the same municipality as that of the current location of the user. The facility close to the current location is identified by referring to the address information registered in the facility information shown in Fig. 3.

The facility information shown in Fig. 3 includes four facilities whose type is "coffeehouse." At this time, assuming that all the four "coffeehouses" are facilities close to the current location, the facility information retrieval unit 45c retrieves information indicating the four facilities whose type is "coffeehouse" and information indicating the degrees of congestion of the four facilities.

Subsequently, the facility determination unit 45d determines a facility which has the lowest degree of congestion, on the basis of the information indicating the facilities and the information indicating the degrees of congestion thereof retrieved by the facility information retrieval unit 45c and then transmits a message guiding the user to the facility determined to have the lowest degree of congestion, to the terminal device 20 held by the user (step S7).

In the example of Fig. 3, the facility determination unit 45d determines that, of the four "coffeehouses" retrieved by the facility information retrieval unit 45c, a "coffee shop D" is a facility having the lowest degree of congestion and then transmits a message guiding the user to the "coffee shop D," to the terminal device 20 held by the user.

In contrast, if the charge state falls below the predetermined threshold (step S5: NO), the facility information retrieval unit 45c retrieves information indicating the degrees of congestion of facilities which provide charging services, of the facilities in which the schedule or task to be executed within the predetermined time can be executed (step S8).

Specifically, first, the facility information retrieval unit 45c retrieves information indicating the current location from the terminal 20. The facility information retrieval unit 45c then determines a facility type in which the schedule or task to be executed within the predetermined time can be executed.

The facility information retrieval unit 45c then retrieves information indicating facilities which correspond to the determined facility type, provides charging services, and are close to the retrieved current location, from among the facilities registered in the facility information shown in Fig. 3, as well as retrieves information indicating the degrees of congestion of the facilities.

For example, if the schedule to be executed within the predetermined time is a video conference, the facility information retrieval unit 45c determines a facility type in which the video conference can be executed. The facility information retrieval unit 45c then determines that the video conference can be executed at a "coffeehouse."

In this case, the facility information retrieval unit 45c retrieves information indicating facilities which type is "coffeehouse" and which provide charging services and are close to the current location, from among the facilities registered in the facility information shown in Fig. 3, as well as retrieves information indicating the degrees of congestion of the facilities.

The facility information shown in Fig. 3 includes two facilities whose type is "coffeehouse" and which provide charging services. At this time, assuming that both the two "coffeehouses" are facilities close to the current location, the facility information retrieval unit 45c retrieves information indicating the two facilities, whose type is "coffeehouse," and information indicating the degrees of congestion of the two facilities.

Subsequently, based on the information indicating the facilities and the information indicating the degrees of congestion of the facilities retrieved by the facility information retrieval unit 45c, the facility determination unit 45d determines a facility which provides charging services and has the lowest degree of congestion. The facility determination unit 45d then transmits a message guiding the user to the facility determined to have the lowest degree of congestion, to the terminal device 20 held by the user (step S9).

In the example shown in Fig. 3, the facility determination unit 45d determines that, of the two "coffeehouses" retrieved by the facility information retrieval unit 45c, "B coffee" is a facility having the lowest degree of congestion and then transmits a message guiding the user to "B coffee," to the terminal device 20 held by the user.

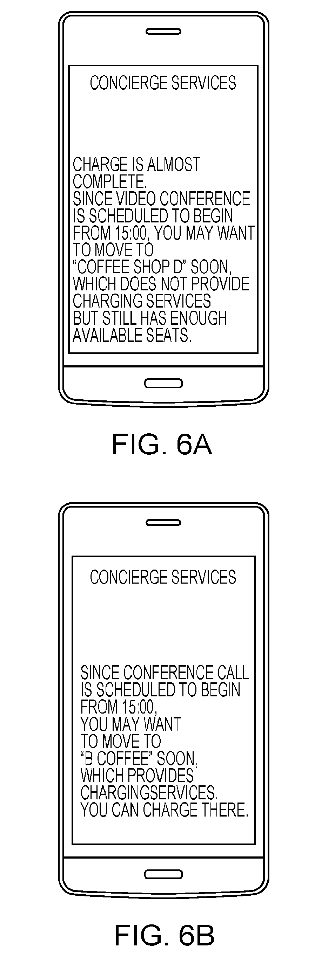

Referring now to Fig. 6A and 6B, there will be described display examples of a message guiding the user to a facility. Figs. 6A and 6B are diagrams showing display examples of a user guide message according to the present embodiment.

Fig. 6A shows a display example when the amount of charge of one of the terminal devices 20a to 20c exceeds a predetermined threshold, that is, when the amount of charge of one of the terminal devices 20a to 20c is sufficient. Fig. 6B shows a display example when the amount of charge of one of the terminal devices 20a to 20c falls below the predetermined threshold, that is, when one of the terminal devices 20a to 20c has to be charged.

As shown in Fig. 6A, when the amount of charge of one of the terminal devices 20a to 20c is sufficient, the terminal device 20 displays guide information encouraging the user to move to the next destination "coffee shop D," as well as information indicating that this facility does not provide charging services.

As shown in Fig. 6B, when one of the terminal devices 20a to 20c has to be charged, the terminal device 20 displays guide information encouraging the user to move to the next destination "B coffee," as well as information indicating that this facility provides charging services and the terminal 20 can be charged.

As seen above, the action encouragement device 40 according to the present embodiment can guide the user of the terminal device 20 to the facility suitable for executing the schedule or task of the user, by using the information indicating the schedule or task, the charge state information of the terminal device, and the information indicating the degree of congestion of the facility.

Alternatively, the action encouragement device 40 may determine a facility suitable for executing the schedule or task of the user on the basis of the information indicating the schedule or task and the charge state information of the terminal device 20 held by the user without using the information indicating the degree of congestion of the facility and then transmit a message guiding the user to the determined facility, to the terminal device 20.

If there are multiple facilities suitable for executing the schedule or task, the action encouragement device 40 may transmit a message guiding the user to one of such facilities, to the terminal device 20 held by the user.

Or, if there are multiple facilities suitable for executing the schedule or task, the action encouragement device 40 may transmit a message guiding the user to a facility closest to the current location, of such facilities, to the terminal device 20.

As described above, in the present embodiment, the action encouragement device 40 transmits a message guiding the user to the next facility, to the terminal device 20 held by the user. Additionally, if the facility in which the user is currently staying is a facility suitable for executing the schedule or task, the action encouragement device 40 may transmit a message indicating that the user does not have to move from the current facility, to the terminal device 20.

In the present embodiment, if there is a schedule or task to be executed within the predetermined time in step S3 of Fig. 5, the action encouragement device 40 determines a facility suitable as the next destination and transmits a message guiding the user to that facility. However, the present disclosure is not limited to these steps.

For example, when the amount of charge of any of the terminal devices 20a to 20c falls below the predetermined threshold, the action encouragement device 40 may determine, as a facility suitable as the next destination, a facility which provides charging services, in which the schedule or task can be executed, and which has a low degree of congestion and then may transmit a message guiding the user to that facility.

Further, if the degree of congestion of the facility in which the user is currently staying exceeds a predetermined threshold, the action encouragement device 40 may determine, as a facility suitable as the next destination, a facility which has a low degree of congestion and in which the schedule or task can be executed and then may transmit a message guiding the user to that facility.

The embodiment of the present disclosure has been described in detail with reference to the drawings. The functions of the terminal devices 20, facility information management device 30, and action encouragement device 40 can be implemented by a computer program.

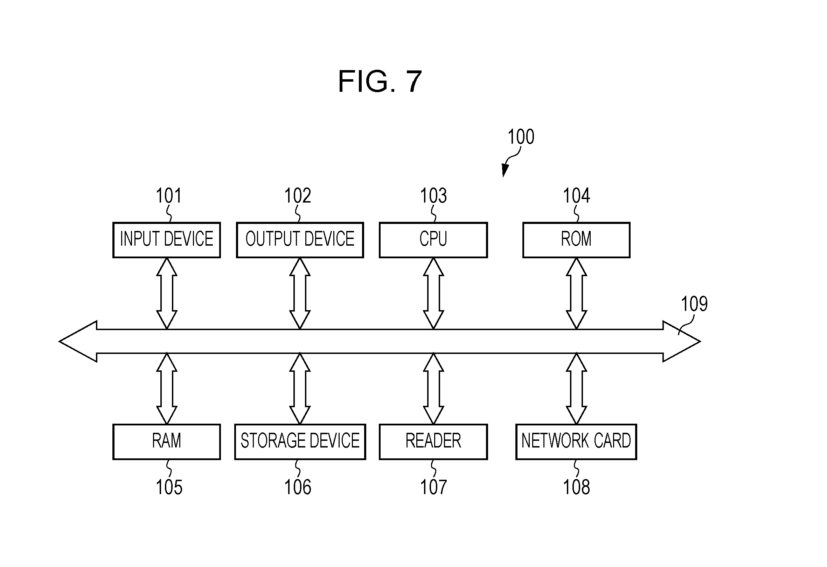

Fig. 7 is a diagram showing the hardware configuration of a computer that implements the functions of the devices on the basis of a program.

A computer 100 includes an input device 101 such as a keyboard, mouse, touchpad, or buttons, an output device 102 such as a display or speaker, a central processing unit (CPU) 103, a read-only memory (ROM) 104, a random access memory (RAM) 105, a storage device 106 such as a hard disk drive or solid-state drive (SSD), a reader 107 that reads information from a recording medium such as a digital versatile disk read-only memory (DVD-ROM) or universal serial bus (USB) memory, and a network card 108 that performs communication through a network. The respective devices are connected through a bus 309.

The reader 107 reads a program for implementing the functions of the devices from a recording medium and stores the program in the storage device 106. Alternatively, the network card 108 communicates with a server connected to the network, downloads a program for implementing the functions of the devices from the server, and stores the program in the storage unit 106.

The CPU 103 copies the program stored in the storage device 306 to the RAM 105, and sequentially reads commands included in the program from the RAM 105 and executes the commands. Thus, the functions of the devices are implemented.

The technology described in the above embodiment can be implemented, for example, in the following types of cloud services. However, the types as which the technology described in the above embodiment can be implemented is not limited thereto.

### Service type 1: company's own data center type

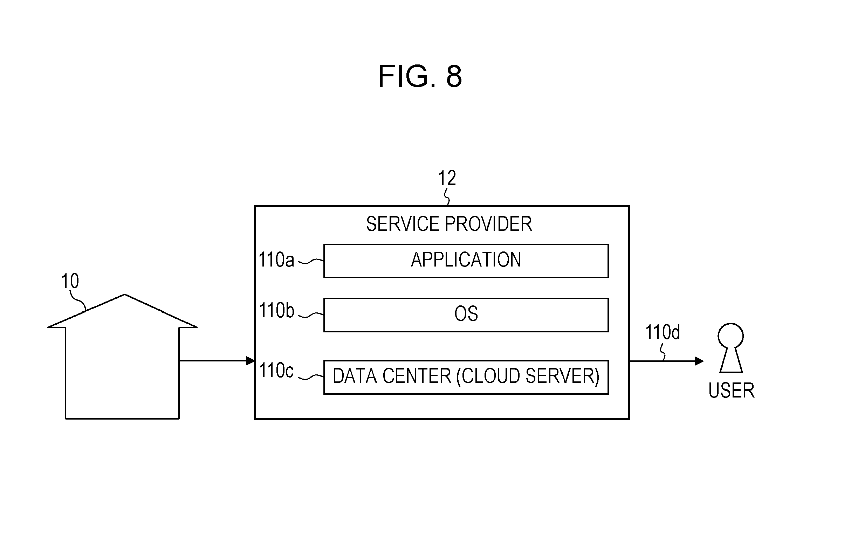

Fig. 8 is a diagram showing service type 1 (company's own data center type). In the present type, a service provider 12 retrieves information from a group 10 and provides services to a user. In the present type, the service provider 12 has functions of a data center operating company. That is, the service provider 12 holds a cloud server 11 a which manage big data. Accordingly, there is no data center operating company.

In the present type, the service provider 12 operates and manages a data center 110c (cloud server 11 a). The service provider 12 also manages an OS 110b and an application 110a. The service provider 12 also provides services using the OS 110b and application 110a (110d).

### Service type 2: IaaS type

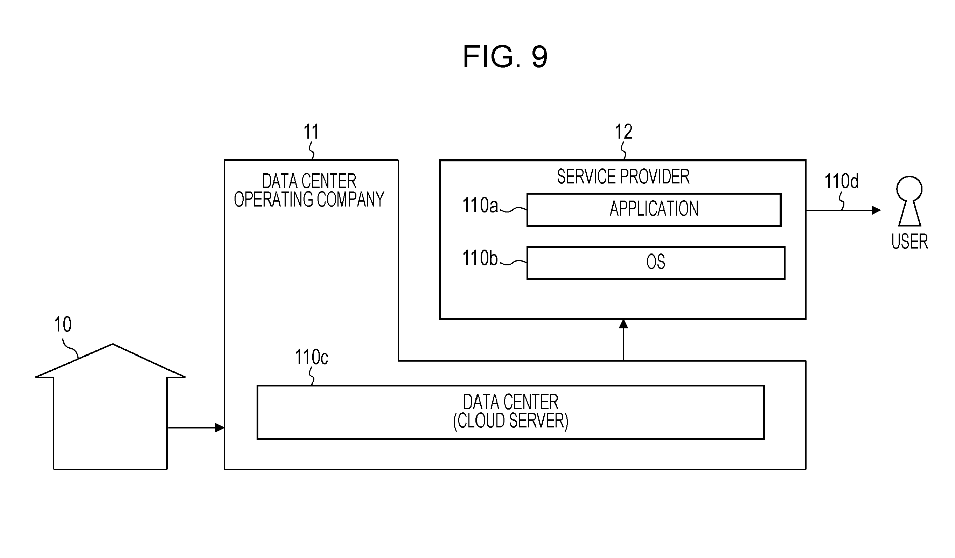

Fig. 9 is a diagram showing service type 2 (IaaS type). As used herein, IaaS is the abbreviation of infrastructure as a service and is a cloud service providing model which provides an infrastructure for constructing and operating a computer system, as a service through the Internet.

In the present type, a data center operating company operates and manages a data center 110c (cloud server 11a). A service provider 12 manages an OS 110b and an application 110a. The service provider 12 also provides services using the OS 110b and application 110a (110d).

### Service type 3: PaaS type

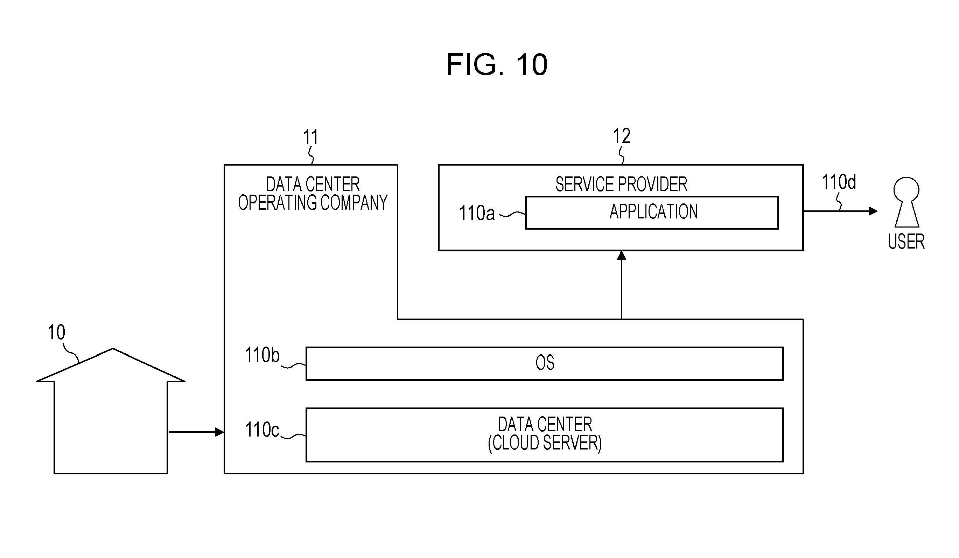

Fig. 10 is a diagram showing service type 3 (PaaS type). As used herein, PaaS is the abbreviation of platform as a service and is a cloud service providing model which provides a platform serving as an infrastructure for constructing and operating software, as a service through the Internet.

In the present type, a data center operating company 11 manages an OS 110b and operates and manages a data center 110c (cloud server 11 a). A service provider 12 manages an application 110a. The service provider 12 also provides services using the OS 110b managed by the data center operating company and the application 110a managed by the service provider 12 (110d).

### Service type 4: SaaS type

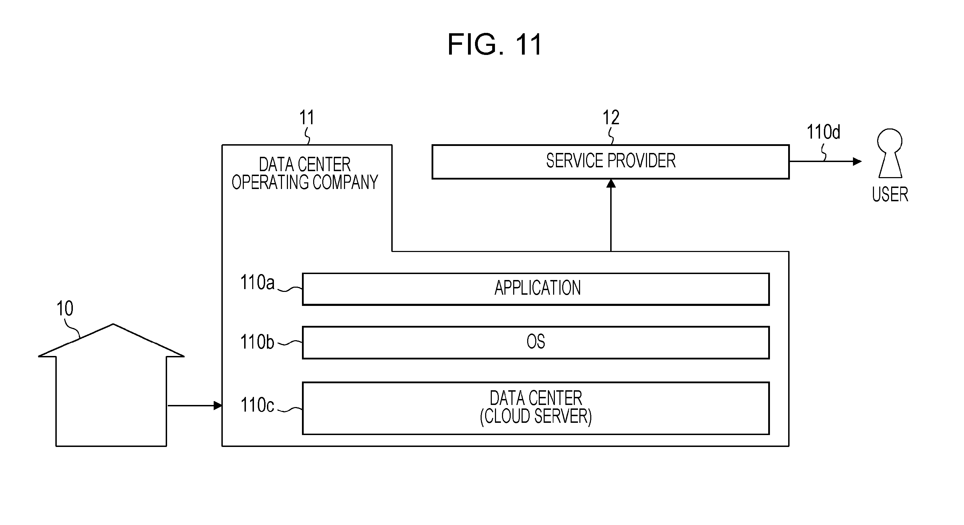

Fig. 11 is a diagram showing service type 4 (SaaS type). As used herein, SaaS is the abbreviation of software as a service. SaaS is, for example, a cloud service providing model which allows companies or individuals (users) not holding a data center (cloud server) to use an application provided by a platform provider holding a data center (cloud server) through a network such as the Internet.

In the present type, a data center operating company 11 manages an application 110a and an OS 110b and operates and manages a data center 110c (cloud server 11 a). A service provider 12 provides services using the OS 110b and application 110a managed by the data center operating company 11 (110d).

In any of the above types, the service provider 12 provides services. The service provider or data center operating company may develop an OS, application, a database of big data, or the like on its own or may outsource such development to a third party.

The action encouragement method according to the present disclosure is suitably used in servers which encourage the user to take an action.

## Claims

1. A computer-implemented method comprising:
retrieving, by a computer, information indicating a schedule or task of a user, the schedule being a plan whose execution time is determined, the task being a plan whose execution time is not determined;
retrieving, by the computer, charge state information indicating the amount of charge of a device held by the user;
determining, by the computer, a facility to which the user is to be guided, on the basis of the information indicating the schedule or task of the user and the charge state information; and
outputting information indicating the determined facility to the device held by the user.

2. The computer-implemented method according to Claim 1, further comprising retrieving, by the computer, information indicating the degree of congestion, the degree of congestion being a ratio of the number of current users of the facility to the maximum number of users which can use the facility, wherein
the determining comprises the computer determining the facility to which the user is to be guided, on the basis of the information indicating the schedule or task of the user, the charge state information, and the information indicating the degree of congestion.

3. The computer-implemented method according to Claim 1, wherein
the determining comprises if the computer detects that there is a schedule or task to be executed within a predetermined time, starting to determine the facility to which the user is to be guided.

4. The computer-implemented method according to Claim 3, wherein the determining comprises determining that a facility suitable for executing the schedule or task to be executed within the predetermined time is the facility to which the user is to be guided.

5. The computer-implemented method according to Claim 1, wherein
the determining comprises if the computer detects that the amount of charge of the device held by the user has fallen below a predetermined amount, starting to determine the facility to which the user is to be guided.

6. The computer-implemented method according to Claim 5, further comprising retrieving, by the computer, information indicating the degree of congestion, the degree of congestion being a ratio of the number of current users of the facility to the maximum number of users which can use the facility, wherein
the determining comprises determining that a facility which provides a charging service for charging the device held by the user, in which the user can execute the schedule or task, and which has a lower degree of congestion than a predetermined level is the facility to which the user is to be guided.

7. The computer-implemented method according to Claim 2, wherein
the determining comprises if the computer detects that the degree of congestion of the facility has exceeded a predetermined level, starting to determine the facility to which the user is to be guided.

8. The computer-implemented method according to Claim 7, wherein the determining comprises determining that a facility which has a lower degree of congestion than the predetermined level and in which the user can execute the schedule or task is the facility to which the user is to be guided.

9. The computer-implemented method according to Claim 1, wherein
the determining comprises if it is determined that there are a plurality of facilities to which the user is to be guided, selecting one of the facilities, and
the outputting comprises outputting information indicating the selected facility to the device held by the user.

10. The computer-implemented method according to Claim 8, wherein the determining comprises if it is determined that there are a plurality of facilities to which the user is to be guided, selecting a facility closest to a current location from among the facilities.

11. The computer-implemented method according to Claim 1, wherein
the determining comprises determining that a facility suitable for the user to execute the schedule or task is the facility to which the user is to be guided, and
the outputting comprises if the facility to which the user is to be guided and a facility in which the user is currently staying are identical, outputting information indicating that the user does not have to move from the facility in which the user is currently staying, to the device held by the user.

12. An apparatus comprising: a processor; and a non-transitory memory having stored therein instructions which, when executed by the processor, cause the processor to perform operations comprising:
retrieving information indicating a schedule or task of a user, the schedule being a plan whose execution time is determined, the task being a plan whose execution time is not determined;
retrieving charge state information indicating the amount of charge of a device held by the user; and
determining a facility to which the user is to be guided, on the basis of the information indicating the schedule or task of the user and the charge state information and outputting information indicating the determined facility.

13. A non-transitory recording medium having stored therein instructions which, when executed by the processor, cause the processor to perform operations comprising:
retrieving information indicating a schedule or task of a user, the schedule being a plan whose execution time is determined, the task being a plan whose execution time is not determined;
retrieving charge state information indicating the amount of charge of a device held by the user; and
determining a facility to which the user is to be guided, on the basis of the information indicating the schedule or task of the user and the charge state information and outputting information indicating the determined facility.
